# EUROPÄISCHE PATENTANMELDUNG

(11) **EP 4 328 572 A1**
(43) Veröffentlichungstag der Anmeldung: **28.02.2024**
(21) Anmeldenummer: 23190571.2
(22) Anmeldetag: 09.08.2023
(51) Int. Cl.: G01N 21/90

(54) **MEHRSPURIGE INSPEKTION VON BEHÄLTNISSEN**

(30) Priorität: 22.08.2022 DE 102022121195
(71) Anmelder: Krones AG, 93073 Neutraubling (DE)
(72) Erfinder: Gut, Thorsten, 93073 Neutraubling (DE); Clausen, Niels, 93073 Neutraubling (DE); Luecke, Jens, 93073 Neutraubling (DE); Depner, Christian, 93073 Neutraubling (DE)
(74) Vertreter: Bittner, Bernhard

(57) **Zusammenfassung**

Vorrichtung zum Inspizieren von Behältnissen mit einer Transporteinrichtung (2) zum Transportieren der Behältnisse und mit einer Inspektionseinrichtung, welche dazu geeignet und bestimmt ist, die von der Transporteinrichtung transportierten Behältnisse zu inspizieren, dadurch gekennzeichnet, dass
die Transporteinrichtung (2) eine erste Transporteinheit (22) aufweist, welche die zu Inspizierenden Behältnisse entlang eines ersten Transportpfads (P1) transportiert und eine zweite Transporteinheit (24) welche die zu inspizierenden Behältnisse (10) entlang eines zweiten Transportpfads (P2) transportiert, wobei der erste Transportpfad (P1) und der zweite Transportpfad (P2) wenigstens abschnittsweise parallel zueinander verlaufen.

## Beschreibung

Die vorliegende Erfindung bezieht sich auf eine Vorrichtung und ein Verfahren zum Inspizieren von Behältnissen und insbesondere zum Inspizieren von befüllten und verschlossenen Behältnissen. Derartige Vorrichtungen und Verfahren sind aus dem Stand der Technik seit langem bekannt. Üblicherweise werden im Bereich der getränkeherstellenden Industrie Flüssigkeiten wie Getränke in Behältnisse eingefüllt und diese Behältnisse einschließend verschlossen, beispielsweise mit einem Drehverschluss. Bei diesen Vorgängen kann es gleichwohl zu Fehlern kommen, welche sich negativ auf die Haltbarkeit des Produkts oder andere Eigenschaften auswirken können. So ist es möglich, dass derartige Verschlüsse schlecht oder ungenau sitzen oder dass derartige Verschlüsse beschädigt sind.

Aus diesem Grund ist es im Stand der Technik bekannt, Behältnisse, beispielsweise nachdem sie befüllt und verschlossen wurden zu inspizieren. Üblicherweise transportiert zu diesem Zweck eine Transporteinrichtung wie etwa ein Förderband die Behältnisse und eine Inspektionseinrichtung beispielsweise eine Bildaufnahmeeinrichtung beobachtet die einzelnen Behältnisse und gibt bevorzugt auch Werte aus, die darauf rückschließen lassen, ob die Behältnisse ordnungsgemäß sind.

Mit immer höheren Maschinenleistungen wird generell nach Verfahren gesucht, auch derartige Inspektionen effizienter zu gestalten.

Im Stand der Technik sind unterschiedliche Systeme zum Transportieren von Behältnissen bekannt. So ist beispielsweise aus der DE 44 425 86 A1 eine Vorrichtung zum Verteilen von Gefäßen mit mehreren Zuförderern und mehreren Abförderern und einer dazwischen angeordneten Transferzone bekannt.

Aus der DE 10 2016 211 910 A1 ist eine Inspektionsvorrichtung zur Inspektion von in einem Leergutkasten angeordneten Behältern bekannt.

Die oben genannte Aufgabe wird erfindungsgemäß durch die Gegenstände der unabhängigen Patentansprüche gelöst. Vorteilhafte Ausführungsformen und Weiterbildungen sind Gegenstand der Unteransprüche.

Eine erfindungsgemäße Vorrichtung zum Inspizieren von Behältnissen weist eine Transporteinrichtung zum Transportieren der Behältnisse auf und eine Inspektionseinrichtung, welche dazu geeignet und bestimmt ist, die von der Transporteinrichtung transportierten Behältnisse zu inspizieren.

Erfindungsgemäß weist die Transporteinrichtung eine erste Transporteinheit auf, welche die zu inspizierenden Behältnisse entlang eines ersten Transportpfads transportiert und eine zweite Transporteinheit, welche die zu inspizierenden Behältnisse entlang eines zweiten Transportpfads transportiert, wobei der erste Transportpfad und der zweite Transportpfad wenigstens abschnittsweise parallel zueinander verlaufen.

Besonders bevorzugt verlaufen die beiden Transportpfade wenigstens im Bereich der Inspektionseinrichtung parallel zueinander. Bevorzugt ist die Inspektionseinrichtung stationär angeordnet und die Behältnisse werden an dieser vorbei transportiert.

Im Stand der Technik werden die Behältnisse aus Vorrichtungen wie etwa einer Fülleinrichtung in einer Spur herausgefahren und direkt hinter der Fülleinrichtung mit einer Inspektionseinrichtung auf ihre Richtigkeit untersucht. Dieser Vorgang findet im Stand der Technik daher im einspurigen Transport statt. Oftmals werden die Behältnisse nach der Befüllung noch pasteurisiert. Aus dem Stand der Technik sind doppelspurige, bzw. Doppelstockpasteure bekannt, bei denen die Behältnisse in zwei Spuren zugeführt werden.

Im internen Stand der Technik der Anmelderin wird hinter der Inspektionseinrichtung eine Teilungseinrichtung wie eine Weiche vorgesehen. Diese Weiche erfordert einen hohen Platzbedarf und ist auch störanfällig.

Daher schlägt die Erfindung eine ebenfalls mehrspurige Inspektion insbesondere in Kombination mit einem mehrspurigen Auslauf aus einer vorangegangenen Maschine wie etwa einer Fülleinrichtung oder einem Verschließer vor. Damit kann auch nach dem Füller eine zweite komplette Inspektionseinheit eingespart werden und auch der Gedanke eines Linienblocks kann weiterverfolgt werden. Der Ansatz, gerade im Bereich einer Inspektion zweispurig zu fahren ist insoweit ungewöhnlich, da man im Bereich einer Inspektion üblicherweise bemüht ist, diese mit möglichst wenig Störeinflüssen durchzuführen, so dass eine mehrspurige Inspektion diesem generellen Ziel eigentlich zuwiderläuft.

Andererseits führt die hier vorgeschlagene mehrspurige Inspektion zu einem hohen Vorteil. Aus der beschriebenen Vorgehensweise ergib sich der Vorteil von Kosteneinsparungen und auch von Platzeinsparungen. Zukünftig wird damit bevorzugt nur eine Inspektionseinrichtung zum Inspizieren verwendet.

Besonders bevorzugt sind die beiden Transporteinheiten unabhängig voneinander steuerbar.

So ist es möglich, dass zumindest zeitweise die Transporteinheiten mit unterschiedlichen Transportgeschwindigkeiten betrieben werden. So kann beispielsweise beim Auftreten eines Fehlers eine der beiden Transporteinheiten angehalten werden.

Bei einer bevorzugten Ausführungsform gibt die Inspektionseinrichtung wenigstens einen Wert aus, der für eine Inspektion der Behältnisse charakteristisch ist. Bevorzugt ist dieser Wert dafür charakteristisch, ob das inspizierte Behältnis vorgegebenen Kriterien genügt.

Besonders bevorzugt handelt es sich bei den Behältnissen um befüllte und verschlossene Behältnisse.

Besonders bevorzugt weist die Inspektionseinrichtung eine Beleuchtungseinrichtung auf, welche die Behältnisse beleuchtet. Weiterhin ist auch eine Beobachtungseinrichtung, insbesondere eine Bildaufnahmeeinrichtung vorgesehen, welche Bilder und insbesondere ortsaufgelöste Bilder der beleuchteten Behältnisse aufnimmt. Bei einem bevorzugten Verfahren ist die Inspektionseinrichtung dazu eingerichtet und bestimmt, eine Inspektion im Auflichtverfahren und/oder im Durchlichtverfahren durchzuführen.

Bei einer weiteren bevorzugten Ausführungsform ist der erste Transportpfad in einer vertikalen Richtung über dem zweiten Transportpfad angeordnet oder der erste Transportpfad ist in einer horizontalen Richtung neben dem zweiten Transportpfad angeordnet. Damit können die Behältnisse sowohl in vertikaler Richtung übereinander transportiert werden als auch in horizontaler Richtung nebeneinander.

Bei einer weiteren vorteilhaften Ausführungsform weist die Inspektionseinrichtung wenigstens eine Bildaufnahmeeinrichtung auf, welche ein Bild der von der wenigstens einer Transporteinheit transportierten Behältnisse aufnimmt. Auf Basis dieses Bildes kann bevorzugt eine Auswerteeinrichtung auf bestimmte Fehler schließen oder feststellen, ob die Behältnisse und/oder deren Verschlüsse von bestimmten Soll-Eigenschaften abweichen.

Besonders bevorzugt weist die Vorrichtung einer Triggereinrichtung oder Auslöseeinrichtung auf, welche eine Bildaufnahme der Bildaufnahmeeinrichtung auslöst. Bevorzugt weist daher die Inspektionseinrichtung eine Bildaufnahmeeinrichtung auf, welche ein ortsaufgelöstes Bild, der von der wenigstens einen Transporteinheit transportierten Behältnisse aufnimmt. Weiterhin ist es möglich, dass eine Bildaufnahmeeinrichtung vorgesehen ist, welche von den Behältnissen, die von der ersten Transporteinheit transportiert werden und den Behältnissen, die von der zweiten Transporteinheit transportiert werden Bilder aufnimmt. In diesem Fall nimmt eine Bildaufnahmeeinrichtung Bilder der von beiden Transporteinheiten transportierten Behältnissen auf.

Es wäre jedoch auch denkbar, dass jeder Transporteinheit eine Bildaufnahmeeinrichtung oder wenigstens eine Bildaufnahmeeinrichtung zugeordnet ist.

Bevorzugt weist die Inspektionseinrichtung eine zweite Bildaufnahmeeinrichtung auf, welche ebenfalls dazu geeignet und bestimmt ist ortsaufgelöste Bilder der von der Transporteinrichtung transportierten Behältnisse aufzunehmen.

Besonders bevorzugt weist die Vorrichtung eine Positionserfassungseinrichtung auf, welche eine Position der von der ersten Transporteinheit und/oder der von der zweiten Transporteinheit transportierten Behältnisse entlang des Transportpfads erfasst. So kann beispielsweise ein Lichtschrankensystem vorgesehen sein, mittels dessen Hilfe die Position der Behältnisse erfasst wird.

So können beispielsweise zwei (Trigger)lichtschranken vorgesehen sein, welche vorgeben in welchem Bildbereich das zu untersuchende Behältnis steht, wobei diese insbesondere getrennt für die beiden Transportpfade z.B. oben oder unten erfolgen kann.

Bevorzugt wird getrennt für die beiden Transportpfade getriggert, auch wenn auf den beiden Transportpfaden, beispielsweise oben und unten ein Behältnis auf der nahezu gleichen x-Postition steht.

Die Bildfolge (und oder Bildaufnahme) auf den beiden beiden Transportpfaden also beispielsweise von oben zu unten oder umgekehrt erfolgt dabei bevorzugt mit einem Zeitversatz und bevorzugt einem Zeitversatz von mehr als 10ms (woraus sich ein 10mm Jitter bei 1 m/sec Transportgeschwindigkeit ergibt). Bevorzugt ist der Zeitversatz weniger als 200ms, bevorzugt weniger als 100ms und besonders bevorzugt weniger als 50ms.

Bei einer weiteren bevorzugten Ausführungsform verlaufen die Transportpfade wenigstens im Bereich der Inspektionseinrichtung geradlinig. Auf diese Weise ist eine besonders übersichtliche Inspektion der Behältnisse möglich.

Besonders bevorzugt weisen die erste Transporteinheit und die zweite Transporteinheit getrennte Antriebe auf. Es wäre jedoch auch möglich, dass nur ein Antrieb vorgesehen ist, der beide Transporteinheiten antreibt.

Bei einer weiteren bevorzugten Ausführungsform weist wenigstens eine Transporteinheit mindestens ein Transportband auf, welches die Behältnisse stehend transportiert. Bevorzugt weisen beide Transporteinheiten jeweils ein Transportband auf, welches die Behältnisse stehend transportiert.

Bei einer weiteren vorteilhaften Ausführungsform weist wenigstens eine Transporteinheit und weisen bevorzugt beide Transporteinheiten Führungsmittel auf, welche die Behältnisse während deren Transport führen.

Bei diesen Führungseinrichtungen kann es beispielsweise um Seitenführungsgeländer handeln, welche die Behältnisse seitlich führen. Dabei weisen bevorzugt diese Seitenführungsgeländer eine geringere Höhe auf als diejenige der Behältnisse. Bevorzugt ist eine Höhe der Seitenführungsgeländer geringer als 80% der Höhe der Behältnisse, bevorzugt geringer als 70% der Höhe der Behältnisse, bevorzugt geringer als 60% der Höhe der Behältnisse und bevorzugt geringer als 50% der Höhe der Behältnisse.

Diese Seitenführungseinrichtungen können dabei seitlich verstellbar sein, um eine Anpassung an unterschiedliche Behältnisse zu bewirken. So wäre es möglich, dass eine Verstellung der Seitenführungsgeländer der ersten Transporteinheit und der Seitenführungsgeländer der zweiten Transporteinheit miteinander gekoppelt sind, sodass diese gemeinsam verstellt werden können. Daneben kann auch ein Antrieb zur Verstellung der Position der Führungsgeländer vorgesehen sein, wobei besonders bevorzugt auch hier die Bewegung der beiden Seitenführungsgeländer miteinander gekoppelt ist. Besonders bevorzugt sind die Führungsmittel beidseitig bezüglich des Transportpfads der Behältnisse vorgesehen.

Bei einer weiteren bevorzugten Ausführungsform inspiziert die Inspektionseinrichtung die Behältnisse auf bzw. hinsichtlich wenigstens einer charakteristischen Eigenschaft, wobei bevorzugt diese Eigenschaft aus einer Gruppe von Eigenschaften ausgewählt ist, welche eine Füllhöhe der Behältnisse mit einem Produkt, eine Qualität eines Behältnisverschlusses, einen Sitz eines Behältnisverschlusses, einen Verschlusszustand des Behältnisses mit einem Verschluss, Fehler der Behältnisse, Beschädigungen der Behältnisse und dergleichen enthält. Bevorzugt werden die Behältnisse darauf hin geprüft, ob eine Ist-Eigenschaft von einer Soll-Eigenschaft abweicht.

Bei einer weiteren vorteilhaften Ausführungsform weist die Vorrichtung wenigstens eine Ausleiteinrichtung zum Ausleiten von Behältnissen aus wenigstens einem Transportpfad auf, wobei diese Ausleiteinrichtung bevorzugt in einem Bereich der Vorrichtung angeordnet ist, in dem die Behältnisse auf den beiden Transportpfaden und/oder mit den beiden Transporteinheiten transportiert werden.

Besonders bevorzugt werden daher die Behältnisse in wenigstens zwei Reihen und bevorzugt in genau zwei Reihen an der Ausleiteinrichtung vorbei transportiert.

Bevorzugt ist die Ausleiteinrichtung nach der Inspektionseinrichtung angeordnet. Bevorzugt ist die Ausleiteinrichtung unmittelbar nach der Inspektionseinrichtung angeordnet, wobei unter unmittelbar zu verstehen ist, dass keine weiteren Aggregate zwischen der Inspektionseinrichtung und der Ausleiteinrichtung vorgesehen sind und damit insbesondere lediglich ein Transport zwischen der Inspektionseinrichtung und der Ausleiteinrichtung stattfindet.

Besonders bevorzugt ist die Ausleiteinrichtung dazu geeignet und bestimmt, bestimmte Behältnisse gezielt aus dem Transportpfad bzw. den Transportpfaden auszuschleusen bzw. auszuleiten. Bevorzugt ist die Ausleiteinrichtung dazu geeignet und bestimmt, sowohl auf dem ersten Transportpfad transportierten Behältnisse als auch auf dem zweiten Transportpfad transportierte Behältnisse auszuleiten.

Besonders bevorzugt weist die Ausleiteinrichtung Stoßmittel auf, welche die Behältnisse ausstoßen und besonders bevorzugt quer zu dem Transportpfad ausstoßen.

Besonders bevorzugt weist die Ausleiteinrichtung eine Aufnahmevorrichtung zum Aufnehmen ausgeleiteter Behältnisse auf. Dabei kann diese Aufnahmevorrichtung derart gestaltet werden, dass die Behältnisse durch das Ausleiten beispielsweise durch den Fall in die Aufnahmevorrichtung nicht weiter beschädigt werden, beispielsweise Glasflaschen zerbrechen. Dies kann beispielsweise durch eine entsprechende stoßdämpfende Auskleidung der Aufnahmeeinrichtung erreicht werden. Weiterhin ist es möglich, dass Transportmittel vorgesehen werden, welche die ausgeleiteten Behältnisse von dem Ort der Ausleitung zu der Aufnahmeeinrichtung leiten. Dabei verhindern bevorzugt auch diese Transportmittel einen harten und möglicherweise produktbeschädigenden Aufprall der ausgeleiteten Behältnisse in die Aufnahmevorrichtung.

Besonders bevorzugt ist die Aufnahmevorrichtung unterhalb der Transportpfade angeordnet.

Die vorliegende Erfindung ist weiterhin auf eine Anordnung zum Herstellen von befüllten Behältnissen mit einer Fülleinrichtung vorgesehen, welche die Behältnisse mit einer Flüssigkeit und insbesondere einem Getränk befüllt. Weiterhin weist die Anordnung eine nach der Fülleinrichtung angeordnete Vorrichtung der oben beschriebenen Art auf.

Besonders bevorzugt weist die Fülleinrichtung eine Abführeinrichtung auf, welche die befüllten Behältnisse von der Fülleinrichtung abführt. Besonders bevorzugt ist dabei diese Abführeinrichtung wenigstens zweibahnig ausgeführt, d. h. die Behältnisse werden auf zwei Bahnen bzw. zwei Transportpfaden wenigstens abschnittsweise von der Fülleinrichtung abgeführt.

Bevorzugt schließt sich an die Fülleinrichtung eine Verschließeinrichtung an, welche die Behältnisse mit Verschlüssen verschließt. Dabei ist es möglich, dass die Behältnisse in einem Bereich dieser Verschließeinrichtung einbahnig oder zweibahnig transportiert werden.

Bei einer weiteren vorteilhaften Ausführungsform schließt sich unmittelbar an die Fülleinrichtung die oben beschriebene Inspektionseinrichtung an.

Besonders bevorzugt schließt sich an die Inspektionseinrichtung ein weiteres Aggregat zum Behandeln von Behältnissen an. Bei diesem weiteren Aggregat kann es sich insbesondere aber nicht ausschließlich um einen Pasteur handeln.

Die vorliegende Erfindung ist weiterhin auf ein Verfahren zum Inspizieren von Behältnissen gerichtet, wobei die Behältnisse mit einer Transporteinrichtung transportiert werden und mit einer Inspektionseinrichtung während ihres Transports inspiziert werden.

Erfindungsgemäß weist die Transporteinrichtung eine erste Transporteinheit auf, welche die zu inspizierenden Behältnisse entlang eines ersten Transportpfads transportiert und eine zweite Transporteinheit, welche die zu inspizierenden Behältnisse entlang eines zweiten Transportpfads transportiert, wobei der erste Transportpfad und der zweite Transportpfad wenigstens abschnittsweise parallel zueinander verlaufen.

Insbesondere transportiert die Transporteinrichtung die Behältnisse entlang eines geradlinigen Transportpfads einbahnig. Bevorzugt transportiert die Transporteinrichtung die Behältnisse vereinzelt und/oder beabstandet zueinander. Dabei kann bevorzugt die Transporteinrichtung die Behältnisse mit einem Abstand zueinander fördern, der größer ist als der Querschnitt eines einzelnen Behältnisses.

Bei einem weiteren bevorzugten Verfahren werden einzelne Behältnisse in Reaktion auf die Inspektionsergebnisse der Inspektionseinrichtung aus dem Transportpfad ausgeleitet. Dabei ist bevorzugt eine Ausleitung von Behältnissen sowohl aus dem ersten Transportpfad als auch aus dem zweiten Transportpfad möglich.

Bei einem weiteren bevorzugten Verfahren werden die Behältnisse berührungslos und insbesondere optisch inspiziert.

Bei einem weiteren bevorzugten Verfahren werden die Behältnisse entlang ihrer Transportpfade in der Transportrichtung versetzt zueinander transportiert. Dies erleichtert insbesondere die Inspektion einzelner bestimmter Behältnisse sowie auch die Ausschleusung einzelner Behältnisse. Diese Vorgehensweise ist besonders hilfreich, wenn die Transportpfade horizontal nebeneinander angeordnet sind, kann jedoch auch bei der Anordnung der Transportpfade übereinander Anwendung finden.

Weitere Vorteile und Ausführungsformen ergeben sich aus den beigefügten Zeichnungen:
Darin zeigen:
- Fig. 1: eine schematische Darstellung einer erfindungsgemäßen Vorrichtung in einer ersten Ausgestaltung; und
- Fig. 2: eine Darstellung der vorliegenden Erfindung in einer zweiten Ausgestaltung.

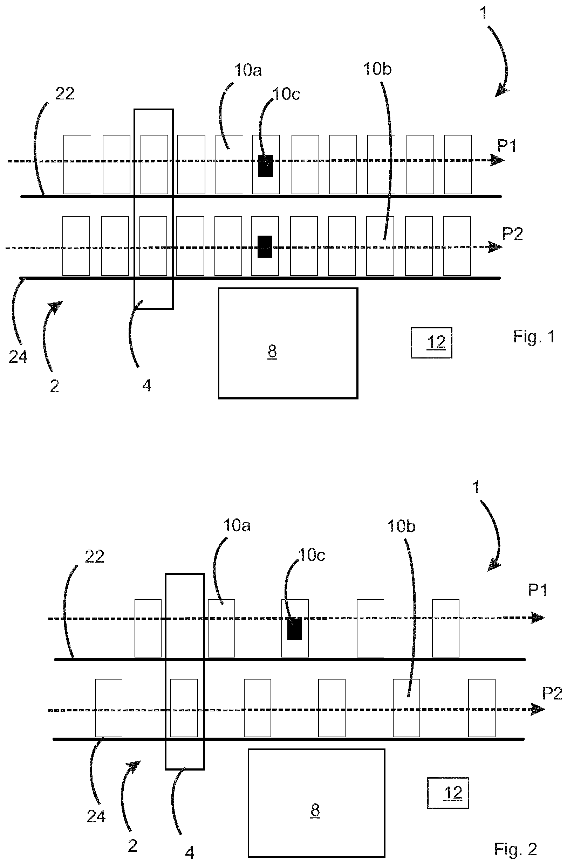

Fig. 1 zeigt eine schematische Darstellung einer erfindungsgemäßen Vorrichtung 1. Diese weist eine in ihrer Gesamtheit mit 2 bezeichnete Transporteinrichtung auf. Diese Transporteinrichtung weist hier eine erste Transporteinheit 22 und eine zweite Transporteinheit 24 auf. Diese sind hier jeweils als Transportbänder ausgestaltet, auf denen die Behältnisse 10a, 10b und 10c -bevorzugt stehend - transportiert werden.

Die erste Transporteinheit 22 fördert die Behältnisse entlang eines ersten Transportpfads P1 und die zweite Transporteinheit 24 fördert die Behältnisse entlang eines zweiten Transportpfads P2. Diese Transportpfade P1 und P2 sind parallel zueinander.

Das Bezugszeichen 4 kennzeichnet eine Inspektionseinrichtung, welche die Behältnisse inspiziert. Diese Inspektionseinrichtung 4 kann dabei eine Beleuchtungseinrichtung zum Beleuchten der Behältnisse aufweisen und auch eine Bildaufnahmeeinrichtung, welche insbesondere Bilder der transportierten Behältnisse aufnimmt. Das Bezugszeichen 12 kennzeichnet eine Steuerungseinrichtung, welche in Reaktion auf ein Inspektionsergebnis eine Ausleiteinheit 8 anspricht. Diese kann einzelne fehlerhafte Behältnisse 10c aus dem Transportpfad ausschließen bzw. ausleiten.

Fig. 2 zeigt eine weitere Ausgestaltung der vorliegenden Erfindung. Bei dieser Ausgestaltung werden die Behältnisse 10A und 10B in der Transportrichtung, die hier von links nach rechts verläuft, versetzt angeordnet. Auf diese Weise ist sowohl eine Inspektion als auch eine Ausschleusung leichter durchführbar. Andererseits wird der Durchsatz bei dieser Vorrichtung etwas verringert.

Bei einer bevorzugten Ausführungsform weist die Vorrichtung für jeden Transportpfad wenigstens je eine Ausleiteinrichtung auf, wobei bevorzugt diese Ausleiteinrichtungen unabhängig voneinander steuerbar sind. Bevorzugt ist daher jedem Transportpfad wenigstens eine und bevorzugt genau eine Ausleiteinrichtung zugeordnet. In diesem Fall kann die Abfolge der Behältnisse auf den beiden Transportpfaden beliebig sein und ist bevorzugt nur durch die Retriggerzeit der jeweiligen Bildaufnahmeeinrichtung begrenzt.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung zum Inspizieren von Behältnissen mit einer Transporteinrichtung (2) zum Transportieren der Behältnisse und mit einer Inspektionseinrichtung, welche dazu geeignet und bestimmt ist, die von der Transporteinrichtung transportierten Behältnisse zu inspizieren,
**dadurch gekennzeichnet, dass**
die Transporteinrichtung (2) eine erste Transporteinheit (22) aufweist, welche die zu Inspizierenden Behältnisse entlang eines ersten Transportpfads (P1) transportiert und eine zweite Transporteinheit (24) welche die zu inspizierenden Behältnisse (10) entlang eines zweiten Transportpfads (P2) transportiert, wobei der erste Transportpfad (P1) und der zweite Transportpfad (P2) wenigstens abschnittsweise parallel zueinander verlaufen.

2. Vorrichtung (1) nach Anspruch 1,
**dadurch gekennzeichnet dass**,
der erste Transportpfad (P1) in einer vertikalen Richtung über dem zweiten Transportpfad (P2) angeordnet ist oder der erste Transportpfad (P1) in einer horizontalen Richtung neben dem zweiten Transportpfad (P2) angeordnet ist.

3. Vorrichtung (1) nach wenigstens einem der vorangegangenen Ansprüche,
**dadurch gekennzeichnet, dass**
die Inspektionseinrichtung wenigstens eine Bildaufnahmeeinrichtung aufweist, welche ein Bild der von wenigstens einer Transporteinheit (22. 24) transportierten Behältnisse (10a, 10b) aufnimmt.

4. Vorrichtung (1) nach wenigstens einem der vorangegangenen Ansprüche,
**dadurch gekennzeichnet, dass**
die Transportpfade (P1, P2) wenigstens im Bereich der Inspektionseinrichtung geradlinig verlaufen.

5. Vorrichtung (1) nach wenigstens einem der vorangegangenen Ansprüche,
**dadurch gekennzeichnet, dass**
wenigstens eine Transporteinheit (22, 24) ein Transportband aufweist, welches die Behältnisse (10) stehend transportiert.

6. Vorrichtung (1) nach wenigstens einem der vorangegangenen Ansprüche,
**dadurch gekennzeichnet, dass**
wenigstens eine Transporteinheit Führungsmittel aufweist, welche die Behältnisse während deren Transport führen.

7. Vorrichtung (1) nach wenigstens einem der vorangegangenen Ansprüche,
**dadurch gekennzeichnet, dass**
die Inspektionseinrichtung die Behältnisse auf wenigstens eine charakteristische Eigenschaft hin inspiziert, wobei diese Eigenschaft aus einer Gruppe von Eigenschaften ausgewählt ist, welche eine Füllhöhe der Behältnisse mit einem Produkt, die Qualität eines Behältnisverschlusses, einen Sitz eines Behältnisverschlusses an dem Behältnis und dergleichen enthält.

8. Vorrichtung (1) nach wenigstens einem der vorangegangenen Ansprüche,
**dadurch gekennzeichnet, dass**
die Vorrichtung (1) wenigstens eine Ausleiteinrichtung zum Ausleiten von Behältnissen aus wenigstens einem Transportpfad aufweist und bevorzugt diese Ausleiteinrichtung in einem Bereich der Vorrichtung (1) angeordnet ist, in dem die Behältnisse auf den beiden Transportpfaden transportiert werden.

9. Anordnung zum Herstellen von befüllten Behältnissen mit einer Fülleinrichtung, welche die Behältnisse mit einer Flüssigkeit und insbesondere einem Getränk befüllt und mit einer nach der Fülleinrichtung angeordneten Vorrichtung (1) nach wenigstens einem der vorangegangenen Ansprüche.

10. Verfahren zum Inspizieren von Behältnissen (10a, 10b), wobei die Behältnisse mit einer Transporteinrichtung transportiert werden und mit einer Inspektionseinrichtung, während ihres Transports inspiziert werden
**dadurch gekennzeichnet, dass**
die Transporteinrichtung (2) eine erste Transporteinheit (22) aufweist, welche die zu Inspizierenden Behältnisse entlang eines ersten Transportpfads (P1) transportiert und eine zweite Transporteinheit (24) welche die zu inspizierenden Behältnisse (10) entlang eines zweiten Transportpfads (P2) transportiert, wobei der erste Transportpfad (P1) und der zweite Transportpfad (P2) wenigstens abschnittsweise parallel zueinander verlaufen.

11. Verfahren nach dem vorangegangenen Anspruch,
**dadurch gekennzeichnet, dass**
einzelne Behältnisse in Reaktion auf ein Inspektionsergebnis der Inspektionseinrichtung aus dem Transportpfad (P1, P2) ausgeleitet werden.

12. Verfahren nach wenigstens einem der vorangegangenen Ansprüche,
**dadurch gekennzeichnet, dass**
die Behältnisse berührungslos und insbesondere optisch inspiziert werden.

13. Verfahren nach wenigstens einem der vorangegangenen Ansprüche,
**dadurch gekennzeichnet, dass**
die Behältnisse entlang ihrer Transportpfade (P1, P2) in der Transportrichtung versetzt zueinander transportiert werden.
